# EUROPÄISCHE PATENTSCHRIFT

(11) **EP 1 145 768 B1**
(45) Veröffentlichungstag und Bekanntmachung des Hinweises auf die Patenterteilung: **16.06.2004**
(21) Anmeldenummer: 00107724.7
(22) Anmeldetag: 11.04.2000
(51) Int. Cl.: B05B 13/04, B27M 3/18, B27G 11/00, B27M 3/00, B05C 5/02

(54) **Schaumauftrag mit zweidimensional verfahrbarer Auftragsvorrichtung**
Foam applicator with two degrees of freedom
Applicateur de mousse à déplacement bidimensionnel

(43) Veröffentlichungstag der Anmeldung: 17.10.2001
(73) Patentinhaber: Siempelkamp Handling Systeme GmbH & Co., 82515 Wolfratshausen (DE)
(72) Erfinder:
(74) Vertreter: Szynka, Dirk

(56) Entgegenhaltungen:
- EP-A- 0 992 291
- WO-A-97/33732
- US-A- 5 505 812
- US-A- 5 569 439
- US-A- 5 714 099

## Beschreibung

Diese Erfindung bezieht sich auf die Herstellung von sogenannten Sandwichelementen, die zwei Deckschichten mit einem die Deckschichten in einem Außenrandbereich verbindenden Rahmen und einem dazwischenliegenden Füllmaterial aufweisen. Es ist bekannt, bei der Herstellung solcher Sandwichelemente das Schaummaterial oder auch eine zu dem Schaummaterial später ausreagierende Vorläuferflüssigkeit in eine Kassette aus der unteren Deckschicht und dem Rahmen aufzubringen, wobei die Kassette also oben offen ist und daher eine Auftragsvorrichtung mit einer Austrittsöffnung über der flächigen Öffnung der Kassette angeordnet sein kann. Die Begriffe "unten" und "oben" sind hier übrigens in Bezug auf das Sandwichelement selbst nicht einschränkend, sondern dienen lediglich zur Unterscheidung der Deckschicht, die vor dem Aufbringen des Schaummaterials oder der Vorläuferflüssigkeit bereits zu der Kassette gehört, von der anderen.

Nach dem Aufbringen des Schaummaterials oder seiner Vorläuferflüssigkeit wird demnach die Kassette mit der oberen Deckschicht verbunden. Im allgemeinen läßt man das Schaummaterial bei geschlossener Kassette vollständig ausreagieren, wobei es meistens notwendig ist, den Abstand zwischen den Deckschichten durch Einspannen in einer entsprechenden Vorrichtung festzulegen, damit das Schaummaterial die Deckschichten und damit das Sandwichelement nicht wieder auseinanderdrückt.

Es ist ferner bekannt, die Kassette beim Aufbringen des Schaummaterials oder der Vorläuferflüssigkeit in einer Längsrichtung mit einer Fördereinrichtung zu bewegen, wobei die Auftragsvorrichtung mit der Austrittsöffnung so bewegt wird, dass sich eine Verteilung des Schaummaterials in der Kassette in Querrichtung ergibt. Dabei sind die Längsrichtung und die Querrichtung nicht unbedingt die Richtung größter Länge der Kassette und die Richtung senkrecht hierzu in der Ebene der Deckschichten, vielmehr ist die Längsrichtung durch die Bewegungsrichtung der Fördereinrichtung definiert und die Querrichtung im wesentlichen senkrecht hierzu in der Ebene der unteren Deckschicht orientiert. Ferner ist es nicht unbedingt notwendig, daß sich die Auftragsvorrichtung oder die Austrittsöffnung selbst in der Querrichtung bewegen; vielmehr ist es auch ausreichend, wenn sich die Richtung des Austritts des Schaum materials oder der Vorläuferflüssigkeit aus der Austrittsöffnung so ändert, daß sich die gewünschte Querrichtungsverteilung des Schaummaterials auf der unteren Deckschicht ergibt.

Die WO 97/33732 zeigt ein Verfahren und eine Vorrichtung zum Aufbringen von Klebstoff auf Möbelplatten und zum Aufkleben von Spiegeln oder Rahmen hierauf. Dabei ist eine Auftragsvorrichtung zweidimensional verfahrbar. Die Möbelplatten sind während des Klebstoffauftrags und beim Anpressen der Spiegel oder Rahmen justiert befestigt und unbeweglich.

Die nachveröffentlichte EP 0 992 291 A2 betrifft ein Verfahren zum Aufbringen von Klebstoff auf Schuhsohlen.

Die US 5 569 439 betrifft das Aufbringen von Harz auf Motorspulen, die auf einem Längsförderer bewegt werden, wobei die Auftragsvorrichtungen quer einstellbar sind und in Längsrichtung den Spulen ausweichen können.

Die US 5 714 099 betrifft ein Aufbringen von Klebstoff auf Verstärkungsrippen von Bauplatten. Dort kann eine Auftragsvorrichtung eindimensional bewegt werden, wobei die Platte festgelegt bleibt.

Schließlich betrifft die US 5 505 812 das Klebstoffbeschichten von Holzstreifen vor der Herstellung von Pressplatten mit Hilfe einer breiten, klebstoffbenetzten Walze.

Von diesem Stand der Technik ausgehend liegt der Erfindung das technische Problem zugrunde, ein im Hinblick auf das Auftragen des Schaummaterials oder seiner Vorläuferflüssigkeit in die Kassette verbessertes Verfahren zur Herstellung des Sandwichelements anzugeben.

Erfindungsgemäß wird dieses Problem gelöst, indem die Auftragsvorrichtung mit der Austrittsöffnung zweidimensional bewegt wird, wobei eine Richtung der Bewegung der Querrichtung und die andere Richtung der Längsrichtung entspricht.

Die Erfindung geht davon aus, dass es im Stand der Technik bislang lediglich bekannt war, die Auftragsvorrichtung mit der Austrittsöffnung eindimensional zu bewegen, d.h. also in der Querrichtung zu verfahren oder in einer Drehebene so zu verschwenken, dass sich die Querrichtungsverteilung ergibt. Dies ist im Prinzip auch ausreichend, weil die zweite, mit der Querrichtung die Ebene der unteren Deckschicht aufspannende Längsrichtung bereits durch die Bewegung der Kassette auf oder in der Fördereinrichtung erfaßt wird. Die konventionelle Vorgehensweise ist zudem nicht nur ausreichend, sondern auch die konstruktiv einfachste Lösung.

Der Erfindung liegt jedoch die Erkenntnis zugrunde, daß sich der zusätzliche konstruktive Aufwand für eine zweidimensionale Beweglichkeit der Auftragsvorrichtung mit der Austrittsöffnung durch eine so deutlich erhöhte Flexibilität und Leistungsverbesserung bezahlt macht, daß hier insgesamt technisch und auch im Sinn der Produktionskosten in vielen Fällen verbesserte Ergebnisse erzielt werden können. Erfindungsgemäß ist der Auftrag des Schaummaterials oder der Vorläuferflüssigkeit nun nämlich unabhängig von der Förderbewegung der Kassette, so daß sich die unterschiedlichsten Auftragsmuster realisieren lassen und sich zur Optimierung der Gleichmäßigkeit des Auftrags und der für den Auftrag benötigten Zeit Ideallösungen finden lassen.

Auch der Begriff "zweidimensional" ist hierbei so allgemein zu verstehen, daß darunter auch Schwenkbewegungen oder Kombinationen aus einer Schwenkbewegung in einer Richtung mit einer translatorischen Bewegung in einer anderen Richtung verstanden werden.

Bevorzugt ist jedoch eine translatorische Bewegung in zumindest einer der Richtungen, vorzugsweise in beiden. Dabei ist es nicht notwendig, daß die translatorische Bewegung in der Querrichtung die gesamte Breite der Kassette in diese Richtung abdeckt. Vielmehr kann durch ein Überschießen des aus der Austrittsöffnung austretenden Materials über einen Randpunkt der Bewegung infolge einer entsprechend schnellen Geschwindigkeitsänderung, also ein Weiterfliegen des ausgetretenen Materials während seiner Fallbewegung, eine wesentliche Vergrößerung der Auftragsbreite gegenüber der tatsächlichen Strecke der translatorischen Bewegung erreicht werden. Das gleiche gilt für eine Kombination einer translatorischen Bewegung mit Veränderungen der Austrittsrichtung des Materials. In analoger Weise kann auch die Auftragslänge in der Längsrichtung größer als die tatsächliche Strecke der translatorischen Bewegung der Auftragsvorrichtung in dieser Richtung sein. Zu Einzelheiten hierzu wird auf eine separate europäische Patentanmeldung mit dem Aktenzeichen 99 120 792 verwiesen und deren diesbezüglicher Offenbarungsgehalt in Bezug genommen.

Vorzugsweise ist die erfindungsgemäße Produktionsanlage dabei so ausgelegt, daß sich die zweidimensionale Bewegung über eine grafische Bewegungssteuerung programmieren läßt, wobei auch Öffnungs- und Schließphasen der Auftragsvorrichtung programmierbar sein sollten. Dadurch kann beim Einsatz der Anlage optimal auf die Besonderheiten verschiedener Sandwichelemente eingegangen werden.

Eine weitere Leistungssteigerung erfährt das erfindungsgemäße Verfahren dadurch, daß parallel zwei Auftragsvorrichtungen mit jeweils einer Austrittsöffnung verwendet werden. Dabei kann eine der Auftragsvorrichtungen konventionell sein, d.h. nur eindimensional beweglich sein, während die andere die Erfindung verwirklicht. Bevorzugt ist allerdings eine zweidimensionale Beweglichkeit beider Auftragsvorrichtungen, die darüber hinaus vorzugsweise unabhängig voneinander programmierbar sein sollte. Dadurch können sich die beiden Auftragsvorrichtungen die abzudeckenden Bahnen bzw. Flächen aufteilen, womit insgesamt minimierte Auftragszeiten realisiert werden können. Dies gilt im Prinzip natürlich auch für mehr als zwei Auftragsvorrichtungen für besondere Fälle.

Die Erfindung bezieht sich besonders auf den Anwendungsbereich von PUR/PIR-Schäumen und den zugehörigen Vorläuferflüssigkeiten, also den Reaktionsgemischen, die nach Auftrag auf die untere Deckschicht zu PUR/PIR-Schäumen aufschäumen. Weiterhin bezieht sich die Erfindung vor allem auf Türelemente in Sandwichbauweise, bei denen also die untere und die obere Deckschicht die sichtbaren Türflächen bilden oder als Türflächen weitere Beschichtungen tragen, wobei das Innenvolumen ausgeschäumt ist. Die Stirn- und Seitenkanten der Tür werden dann im allgemeinen durch den Rahmen gebildet.

Wie bereits erwähnt sind diejenigen Anwendungsfälle für die Erfindung besonders interessant, bei denen die Auftragsbreite und/oder -länge innerhalb einer Kassette uneinheitlich ist, d.h. kein einfaches ununterbrochenes Rechteck ausgeschäumt werden soll. Beispielsweise kann in dem Sandwichelement eine Aussparung vorgesehen sein, im Fall einer Tür z.B. für ein Schloß oder ein Fenster, wobei der für die Aussparung vorgesehene Bereich beim Schaummaterialauftrag ausgespart werden soll. Durch optimale Ausnutzung der zweidimensionalen Beweglichkeit, insbesondere im Fall zweier unabhängiger Auftragsvorrichtungen, lassen sich dabei optimale Produktionsabläufe realisieren. So muß nicht, wie im konventionellen Fall, beim Überfahren des Aussparungsbereichs eine Schließphase der Auftragsvorrichtung vorgesehen sein, also eine für den Schaumauftrag unproduktive Zeit. Statt dessen kann z.B. erst ein Randbereich auf einer Seite der Aussparung und dann der andere Randbereich auf der anderen Seite abgedeckt werden, was nur mit einer zweidimensionalen Beweglichkeit möglich ist Im Falle zweier Auftragsvorrichtungen kann die eine den einen Reststreifen und die andere den anderen abdecken oder die eine Auftragsvorrichtung beide Reststreifen abdecken, während die andere Auftragsvorrichtung gleichzeitig einen anderen Teil der Kassette beschäumt.

Dabei richtet sich die Erfindung sowohl auf das entsprechende Herstellungsverfahren als auch auf eine hierfür ausgelegte Produktionsanlage. Dementsprechend ist die folgende Beschreibung der Erfindung, einschließlich der Ausführungsbeispiele, sowohl im Hinblick auf die damit explizit und implizit offenbarten Verfahrensmerkmale als auch Vorrichtungsmerkmale zu verstehen.

Weiterhin sieht die Erfindung vor, daß die Auftragsvorrichtung einen Rezirkulationsmischkopf mit selbstreinigendem Aufbau aufweist, so daß sich bei Schließphasen, z.B. bei der Bewegung von einem Bereich der zu beschäumenden Fläche in einen anderen, auch bei schnellreagierenden Materialen mit kurzen Startzeiten keine Schwierigkeiten in der Auftragsvorrichtung ergeben. Dies gilt gleichermaßen für zwei oder mehrere Auftragsvorrichtungen.

Insbesondere bei der Herstellung der bereits erwähnten PUR/PIR-Sandwichelemente, z.B. für Türen, wird die Erfindung vorzugsweise vor dem Einlauf einer Doppelbandanlage verwendet, die für eine höhenkontrollierte und temperierte Ausreaktion des Schaummaterials vorgesehen ist.

Zu weiteren Ausführungsformen wird auf die Ansprüche 12 bis 14 verwiesen.

Das folgende Ausführungsbeispiel verdeutlicht die Erfindung in weiteren Einzelheiten, wobei die offenbarten Einzelmerkmale auch in anderen als den dargestellten Kombinationen erfindungswesentlich sein können. Dabei zeigt:
Fig. 1 eine Draufsicht auf einen Teil einer Produktionsanlage für Sandwichelemente nach dem erfindungsgemäßen Verfahren;
Fig. 2 einen Ausschnitt mit dem für das erfindungsgemäße Verfahren wichtigen Teil der Produktionsanlage aus Fig. 1;
Fig. 3 eine schematische Darstellung zu möglichen Wegen von Mischköpfen einer Beschäumstation aus den Fig. 1 und 2 über eine Kassette eines typischen Sandwichelements.

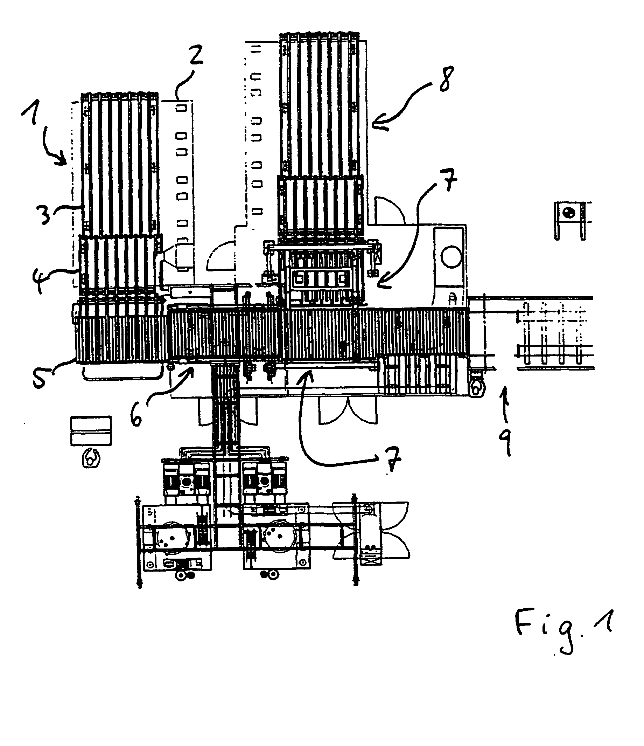

In Fig. 1 ist ein Teil einer Produktionsanlage für Sandwichelemente in Draufsicht gezeigt. Mit dieser Anlage werden unter Verwendung des erfindungsgemäßen Verfahrens Sandwich-Türelemente hergestellt, die aus zwei von einem Rahmen im Außenbereich verbundenen plattenartigen Deckschichten bestehen. Ein PUR/PIR-Schaum wird in das durch die Deckschichten und den Rahmen definierte Volumen eingebracht. Die vorliegende Erfindung bezieht sich auf diesen Vorgang.

Der Übersichtlichkeit halber wird zunächst auch ein kurzer Überblick über die dem erfindungsgemäßen Erfahrungsteil vorhergehenden und nachfolgenden Schritte gegeben. In Fig. 1 zeigt das Bezugszeichen 1 summarisch einen Durchlaufofen mit einer in ein erstes Segment 3 und ein zweites Segment 4 aufgeteilten Riemenfördereinrichtung. In den Durchlaufofen 1 werden in nicht näher dargestellten Weise vorgefertigte Kassetten aus einer bereits mit dem Rahmen verbundenen Unterschale geladen. Weil die Kassetten vereinzelt transportiert und verarbeitet werden, kann die erfindungsgemäße Produktionsanlage auch eine "bunte Reihe" verschiedener Kassettentypen verarbeiten.

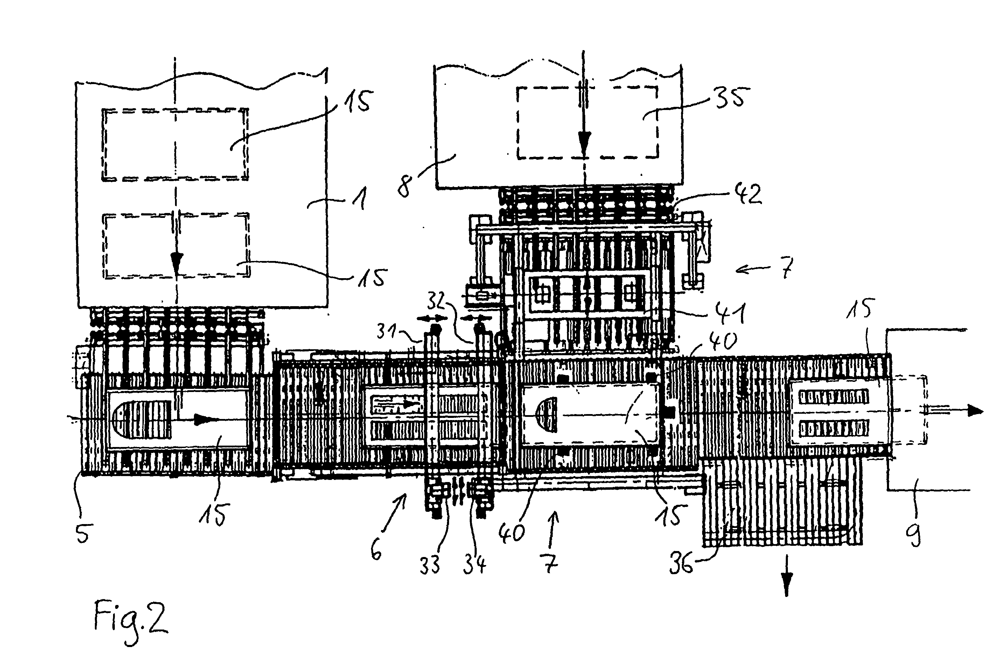

Die Kassetten werden in dem Durchlaufofen 1 auf eine am Ofenauslauf erreichte vorgegebene Prozeßtemperatur erwärmt. Dort übergibt das zweite Segment 4 der Fördereinrichtung die Kassette auf eine in Querrichtung dazu arbeitende Rollenfördereinrichtung 5, und zwar mit Hilfe einer im Bereich der Rollenfördereinrichtung 5 zwischen die Rollen eingreifenden weiteren Riemenfördereinrichtung, also mit einer sogenannten Winkelstation (vgl. auch die Kassetten 15 in Fig. 2, die im folgenden noch erläutert werden).

Die Einzelheiten des Verfahrens der Aufwärmung der Kassetten in dem Durchlaufofen 1 sind Gegenstand einer Parallelanmeldung der selben Anmelderin vom selben Anmeldetag mit dem Titel "Vorwärmtechnik mit Leistungsdrosselung bei Betriebsunterbrechungen". Auf diese Anmeldung wird Bezug genommen, und der Offenbarungsgehalt soll in dieser Anmeldung inbegriffen sein. Im wesentlichen besteht die Neuerung in dem Durchlaufofen darin, daß er in getrennt betreibbare Zonen aufgeteilt ist und im Fall eines Transportstillstands aufgrund einer Störung ein spezielles Temperaturprofil eingestellt werden kann. Dieses Temperaturprofil ist so ausgelegt, daß der tatsächlichen Temperaturentwicklung der Kassetten bei einem ungestörten Durchlauf durch den Ofen entsprechende Temperaturen an den jeweiligen Orten in dem Durchlaufofen 1 herrschen, so daß eine Überhitzung von Kassetten nach Wiederanlaufen des Transports vermieden wird. Zu weiteren Einzelheiten wird auf die zitierte Parallelanmeldung verwiesen.

Wie bereits erwähnt, wird eine solchermaßen vorgewärmte Kassette in die in Fig. 1 nur kursorisch dargestellte Beschäumstation 6 eingefahren, die im Rahmen dieser Anmeldung im einzelnen beschrieben wird. In dieser Beschäumstation 6 werden die Kassetten mit einem Reaktionsgemisch für einen PUR/PIR-Schaum beschickt, daß aus zwei Rezirkulationsmischköpfen einer Doppelportalanlage austritt. Der Start der Reaktion dieses Reaktionsgemisches zu dem PUR/PIR-Schaum wird gefördert und ist abhängig von der durch den Durchlaufofen 1 erzeugten Prozeßtemperatur der Kassette, wobei die hier verwendeten Materialzusammensetzungen und auch der Wärmeverlust der Kassette auf dem Weg von dem Durchlaufofen 1 zu der Beschäumstation 6 berücksichtigt werden müssen.

Mit Hilfe der Rollenfördereinrichtung 5 werden beschäumte Kassetten aus der Beschäumstation 6 weitergefahren in den Bereich einer automatischen Einklipsvorrichtung mit einem Vakuumsaugwagen.

Auch diese Einklipsvorrichtung 7 soll hier nur kursorisch dargestellt werden, Einzelheiten hierzu finden sich ebenfalls in einer Parallelanmeldung derselben Anmelderin vom selben Anmeldetag mit dem Titel "Maschinelles Verklipsen von Sandwichelementen", wobei auch deren Offenbarungsgehalt hiermit in Bezug genommen ist. In dieser automatischen Einklipsvorrichtung 7 werden mit dem Vakuumsaugwagen in einem weiteren Durchlaufofen 8 vorgewärmte Deckschichtelemente auf die mit dem Reaktionsgemisch gefüllte Kassette aufgeklipst, wobei die automatische Einklipsvorrichtung die Deckschicht zunächst schräg hält, um eine Rasteinrichtung auf einer Seite zwischen Kassette und oberer Deckschicht in Eingriff zu bringen, und danach durch ein Geradeanlegen der oberen Deckschicht gegen die Kassette eine weitere Rasteinrichtung auf der anderen Seite einklipst. Dabei kann die zweite Rasteinrichtung durch eine die erste etwas elastisch auslenkende Horizontalbewegung entlastet werden.

Der zweite Durchlaufofen 8 entspricht in seinem inneren Aufbau dem ersten Durchlaufofen 1. Auch die Prozeßtemperatur der oberen Deckschicht ist für einen störungsfreien Ablauf der Ausreaktion des PUR/PIR-Schaums wichtig.

Von der automatischen Einklipsvorrichtung 7 aus fährt das nunmehr geschlossene Sandwichelement über die Rollenfördereinrichtung weiter in eine hier nur schematisch angedeutete konventionelle Doppelbandanlage 9 ein. In der Doppelbandanlage 9 reagiert das PUR/PIR-Schaummaterial vollständig aus, wobei durch die Doppelbandanlage 9 der Abstand der beiden Deckschichten und damit die Stärke des fertigen Sandwichelements justiert wird. Ferner sorgt die Doppelbandanlage 9 für eine geeignete Temperierung; die Vorwärmung der Kassette und der oberen Deckschicht in den Durchlauföfen 1 und 8, eine Temperierung des aus den Rezirkulationsmischköpfen austretenden Reaktionsgemischs und schließlich die Temperierung der Doppelbandanlage 9 sind also miteinander für einen ungestörten Prozeßablauf wichtig.

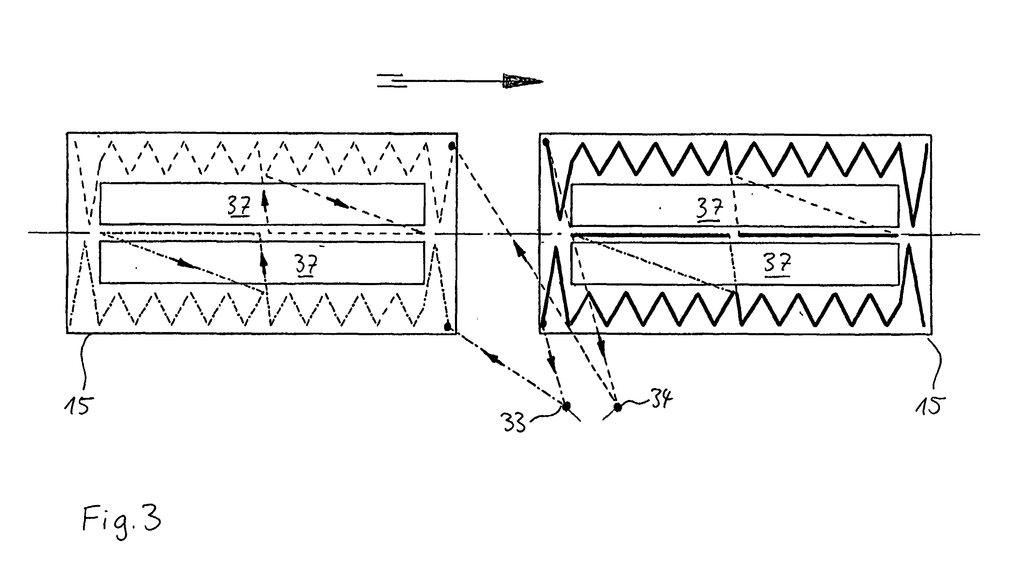

Im folgenden werden anhand der Figuren 2 und 3 der Aufbau und die Funktionsweise der Beschäumstation 6 näher erläutert. Fig. 2 zeigt den mittleren Bereich aus Fig. 1 in vergrößerter Darstellung und in weiteren Einzelheiten. Zunächst sind in Fig. 2 mehrere Kassetten 15 eingezeichnet, und zwar angedeuteterweise im Durchlaufofen 1 während des Vorwärmvorgangs und ferner entlang dem durch die Rollenfördereinrichtung 5 gebildeten Weg von der Winkelstation am Ausgang des Durchlaufofens 1 bis zu der Doppelbandanlage 9. Bei den Kassetten auf der Rollenfördereinrichtung 5 sind ferner Aussparungsstrukturen eingezeichnet, die im folgenden anhand Fig. 3 näher erläutert werden. Schließlich ist in dem zweiten Durchlaufofen 8 eine obere Deckschicht 35 skizziert, die in der Einklipsvorrichtung 7 mit einer Kassette 15 nach dem Schaumauftrag in der Beschäumstation 6 verklipst werden soll.

In den verschiedenen Bereichen sind durch Pfeile die Bewegungsrichtungen beim Transport der Kassetten 15 und der oberen Deckschicht 35 angedeutet. Der im rechten unteren Bereich der Fig. 2 bei einer mit 36 bezeichneten Einrichtung eingezeichnete Pfeil stellt jedoch keinen normalen Transportvorgang dar; vielmehr steht er für die seitliche manuelle Ausschleusung von Schrottelementen aus der Produktion. Dazu können bei der Einrichtung 36 noch im Bereich der Rollenfördereinrichtung 5 zwischen deren Rollen quer dazu orientierte Transportrollen der Ausschleuseinrichtung 36 hochgefahren werden, so daß ein darauf befindliches Sandwichelement über die Ausschleuseinrichtung 36 aus der Rollenfördereinrichtung 5 seitlich heraus entnommen werden kann.

Im Bereich der hier vornehmlich interessierenden Beschäumstation 6 sind zwei Portale 31 und 32 eingezeichnet, bei denen durch Pfeile angedeutet ist, daß sie in der Transportrichtung der Kassetten 15 vorwärts und rückwärts bewegbar sind. Diese motorische Bewegungsmöglichkeit besteht bei den beiden Portalen 31 und 32 jeweils unabhängig voneinander. Der Verfahrweg reicht dabei bis fast zu der vor dem Ausgang des Durchlaufofens 1 liegenden Winkelstation und entspricht damit zumindest der maximalen Länge der zu beschäumenden Kassetten 15. Rechts endet der Verfahrweg dort, wo in Fig. 2 das rechte Portal 32 in seiner Grundstellung eingezeichnet ist. Es versteht sich von selbst, daß das in Fig. 2 rechte Portal nicht ganz bis zum linken Ende des Verfahrweges verfahren werden kann und umgekehrt das in Fig. 2 linke Portal 31 nicht ganz bis zum rechten Ende, sondern nur bis zu der eingezeichneten Grundstellung, weil sich die Portale 31 und 32 in den Randbereichen im Weg stehen.

Beide Portale 31 und 32 tragen an ihrer oberen Quertraverse jeweils einen entlang der Quertraverse verfahrbaren (ebenfalls durch Pfeile angedeutet) Mischkopf 33 bzw. 34. Die Mischköpfe 33 und 34 sind selbstreinigende Rezirkulationsmischköpfe, bei denen ein Stempel verfahrbar ist, der in einer Position die aus jeweiligen Zuführleitungen austretenden Reaktionsgemischkomponenten zusammenführt und aus dem Rezirkulationsmischkopf 33 bzw. 34 vermischt und strömungsberuhigt austreten läßt, in der anderen Position jedoch die Zuführleitungen mit jeweils zugeordneten Abführleitungen verbindet, so daß die Reaktionskomponenten, ohne miteinander vermischt zu werden, rezirkulieren. Durch diesen Aufbau können die Rezirkulationsmischköpfe 33 und 34 schnell einund ausgeschaltet werden, wobei in Ausschaltphasen der Austrittskanal in den Mischköpfen von ausreagierenden Gemischresten durch o.g. Stempel gereinigt und gleichzeitig ein "Nachtropfen" von Schaumgemisch weitgehend vermieden wird. Diese Mischköpfe wurden bisher in der PU-Verfahrenstechnik hauptsächlich in der klassischen diskontinuierlichen Formteil-Fertigung eingesetzt und nicht an Doppelbandanlagen.

Auch die Verfahrbarkeit der Rezirkulationsmischköpfe 33 und 34 entlang der Quertraversen der Portale 31 und 32 ist für jeden Mischkopf unabhängig vom anderen gegeben. Danach sind die Rezirkulationsmischköpfe 33 und 34 im Bereich der Beschäumstation 6 zweidimensional verfahrbar, wobei dies nur mit der Einschränkung für jeden unabhängig vom anderen gilt, daß bei diesem Ausführungsbeispiel das Portal 31 immer stromaufwärts, also im Sinn der Figur 2 links, von dem Portal 32 angeordnet ist. Natürlich lassen sich auch Ausführungsformen vorstellen, bei denen diese Einschränkung entfällt, also ein Portal unter dem anderen hindurchgefahren werden kann, wobei dann einer der Mischköpfe eine kurze Betriebsunterbrechung einlegen müßte.

Fig. 3 zeigt die in Fig. 2 im Bereich der Beschäumstation 6 angeordnete Kassette 15 zweimal nebeneinander liegend. Fig. 3 dient dabei zur Illustration vorteilhafter Verfahrwege der Mischköpfe 33 und 34. Dabei ist die in Fig. 2 eingezeichnete Grundstellung der Mischköpfe 33 und 34 mit Punkten angedeutet und mit den Bezugsziffern 33 und 34 versehen. Strichpunktiert ist der Verfahrweg des Mischkopfs 33 eingezeichnet, während der Verfahrweg des Mischkopfs 34 gestrichelt ist. Dabei geben die Pfeile die Richtung und damit auch die Reihenfolge der einzelnen Wegelemente vor. Im rechten Bereich ist die Kassette 15 mit bereits durchfahrenen Fahrwegen der Mischköpfe gezeichnet, wobei die fette durchgezogene Linie die bereits geschäumte Spur darstellt, so daß die von den Enden dieser Verfahrwege zu der Grundstellung weisenden Strecken das Ende des Beschäumvorgangs für diese Kassette 15 und die Rückkehr in die Grundstellung darstellen.

Die von der Grundstellung etwas weiter nach links wegweisenden Pfeile stellen demgegenüber den Beginn des Beschäumvorgangs dar. Dabei ist zu beachten, daß die Verfahrwege in Fig. 3 im Bezug zu dem durch die sich bewegende Kassette 15 gebildeten Bezugssysteme eingezeichnet sind. Fig. 3 zeigt also die auf der Kassette 15 tatsächlich abgefahrenen grafischen Linien. Diese sind in einer grafischen Bewegungssteuerung der Beschäumstation 6 als grafische Linien, wie in Fig. 3 gezeigt, programmierbar. Die grafische Bewegungssteuerung berücksichtigt dabei jedoch die Bewegung der Kassette 15 auf der Rollenfördereinrichtung 5, so daß die in Fig. 3 eingezeichneten Linien in Bezug zu der ruhenden Umgebung in der Querrichtung der Fig. 3, also der Transportrichtung der Kassette 15, etwas komprimiert sind.

Fig. 3 verdeutlicht, daß durch die zweidimensionale Bewegbarkeit einerseits, die Verwendung zweier unabhängig voneinander verfahrbarer Mischköpfe 33 und 34 andererseits sowie schließlich durch die freie grafische Programmierbarkeit optimaler Linien eine zeitökonomische und gleichzeitig hinsichtlich der Gleichmäßigkeit des Schaumauftrags optimierte Beschäumung möglich ist Dies gilt besonders für die hier dargestellten Kassetten 15, bei denen die eingezeichneten Aussparungen 37 vorgesehen sind. Es versteht sich, daß der Teil der Bewegungsstrecke der Mischköpfe 33 und 34, der diese Aussparungen 37 durchfährt, mit geschlossenem Mischkopf, also ohne Schaumauftrag durchfahren wird (siehe gestrichelte bzw. strichpunktierte Linien im rechten Bereich). Dabei ist die schnelle Schaltbarkeit der beschriebenen Rezirkulationsmischköpfe von Vorteil. Die zweidimensionale Verfahrbarkeit ist jedoch auch bei Kassetten ohne Aussparungen prinzipiell von Vorteil, weil eine größere Freiheit bei der Programmierung der abzufahrenden geometrischen Linien besteht. Diese geometrischen Linien sind für die Gleichmäßigkeit der Schaumbedeckung der Kassetten 15 von großer Bedeutung.

Es liegt im Ermessen des Fachmanns, die für individuelle Kassetten 15 und Aussparungen 37 mit unterschiedlichen Formen günstigsten Linien zu finden. Dabei ist einerseits die Gleichmäßigkeit des Schaumauftrags und andererseits ein möglichst schneller Bewegungsablauf von Bedeutung, so daß die Kassetten 15 mit möglichst hoher Geschwindigkeit durch die Beschäumstation 6 hindurchgefahren werden können. Bei diesem Ausführungsbeispiel beträgt diese Geschwindigkeit beispielsweise 21 m/Min.

## Patentansprüche

1. Verfahren zum Herstellen eines Sandwichelements aus einer unteren und einer oberen Deckschicht (35), einem die Deckschichten in einem Außenrandbereich verbindenden Rahmen und einem Schaummaterial zwischen den Deckschichten und innerhalb des Rahmens,
bei dem das Schaummaterial oder eine Vorläuferflüssigkeit dazu aus einer Austrittsöffnung einer Auftragsvorrichtung (33) aufgebracht wird in eine oben offene Kassette (15) aus der unteren Deckschicht und dem Rahmen und die Kassette (15) danach mit der oberen Deckschicht (35) verbunden wird,
wobei die Kassette (15) mit einer Fördereinrichtung (5) in einer Längsrichtung gefördert wird und die Auftragsvorrichtung (33) mit der Austrittsöffnung so bewegt wird, daß das Schaummaterial in Querrichtung verteilt wird,
**dadurch gekennzeichnet, daß** die Auftragsvorrichtung (33) mit der Austrittsöffnung zweidimensional bewegt wird, wobei eine Richtung der Bewegung der Querrichtung und die andere Richtung der Längsrichtung entspricht.

2. Verfahren nach Anspruch 1, bei dem die der Querrichtung entsprechende Bewegung eine translatorische Bewegung in der Querrichtung ist.

3. Verfahren nach Anspruch 1 oder 2, bei dem die der Längsrichtung entsprechende Bewegung eine translatorische Bewegung in der Längsrichtung ist.

4. Verfahren nach einem der vorstehenden Ansprüche, bei dem die zweidimensionale Bewegung als relativ zu der Kassette (15) definierte grafische Linie programmierbar ist, wobei auch Schließphasen der Auftragsvorrichtung (33) programmierbar sind.

5. Verfahren nach einem der vorstehenden Ansprüche, bei dem eine zweite Auftragsvorrichtung (34) mit einer zweiten Austrittsöffnung vorgesehen ist.

6. Verfahren nach Anspruch 5, bei dem die zweite Auftragsvorrichtung (34) im wesentlichen unabhängig von der ersten Auftragsvorrichtung (33) zweidimensional bewegt wird.

7. Verfahren nach einem der vorstehenden Ansprüche, bei dem das Schaummaterial ein PUR/PIR-Schaum bzw. die Vorläuferflüssigkeit ein zu PUR/PIR-Schaum ausreagierendes Reaktionsgemisch ist.

8. Verfahren nach einem der vorstehenden Ansprüche, bei dem das Sandwichelement ein Türelement ist.

9. Verfahren nach einem der vorstehenden Ansprüche, bei dem das Sandwichelement eine Aussparung (37) in der Schaummateriallage aufweist und der der Aussparung (37) entsprechende Bereich beim Schaummaterialauftrag umfahren wird.

10. Verfahren nach einem der vorstehenden Ansprüche, bei dem die Auftragsvorrichtung(en) einen selbstreinigenden Rezirkulationsmischkopf (33, 34) aufweist (aufweisen).

11. Verfahren nach einem der vorstehenden Ansprüche, bei dem die mit der oberen Deckschicht (35) verbundene Kassette (15) in eine Doppelbandanlage (9) eingefahren wird.

12. Verfahren nach einem der vorstehenden Ansprüche, bei dem die Kassette (15) vor dem Aufbringen des Schaummaterials oder der Vorläuferflüssigkeit vereinzelt ist.

13. Verfahren nach einem der vorstehenden Ansprüche, bei dem die Kassetten (15) vor dem Aufbringen des Schaummaterials oder der Vorläuferflüssigkeit in einem Durchlaufofen (1) mit Hilfe einer Fördereinrichtung (3, 4) über eine Ofenstrecke gefördert und erwärmt werden, so daß die Kassetten (15) am Ende der Förderstrecke eine Prozeßtemperatur (T_{P}) erreichen, wobei der Durchlaufofen (1) in eine Mehrzahl von den Kassetten (15) durchfahrene Ofenzonen (11-14) aufgeteilt ist und bei einer vorübergehenden Betriebsunterbrechung und damit verbundenem Stillstand der Fördereinrichtung (3, 4) jede Ofenzone (11-14) mit in solcher Weise individuell verringerter Temperatur betrieben wird, daß in der Ofenzone (11-14) befindliche Kassetten (15) im wesentlichen eine Zonenpausentemperatur beibehalten, die im wesentlichen der Temperatur einer Kassette (15) in der jeweiligen Ofenzone (11-14) im Normalbetrieb entspricht, so daß nach Wiederaufnahme des Normalbetriebs keine wesentliche Überhitzung der Kassetten (15) über die vorgegebene Prozeßtemperatur (T_{P}) vorliegt.

14. Verfahren nach einem der vorstehenden Ansprüche, bei der nach dem Aufbringen des Schaummaterials oder der Vorläuferflüssigkeit Rasteinrichtungen der oberen Deckschicht (35) und des Rahmens der Kassette (15) an zumindest zwei entgegengesetzten Außenkanten des aus den Deckschichten und dem Rahmen mit der Füllung gebildeten Sandwichelements in Eingriff gebracht werden, so daß der Rahmen und die obere Deckschicht (35) verbunden sind, wobei die Rasteinrichtungen durch eine automatische Einklipsvorrichtung (7) maschinell in Eingriff gebracht werden und die automatische Einklipsvorrichtung (7) unter relativer Schräglage der oberen Deckschicht (35) und der Kassette (15) zunächst die Rasteinrichtung auf einer der beiden Seiten in Eingriff bringt und danach unter Aufrechterhaltung dieses Eingriffs die Schräglage in eine Anlage überführt, wobei bei Herstellung der Anlage die Rasteinrichtung auf der anderen der beiden Seiten in Eingriff gebracht wird.

15. Produktionsanlage zum Herstellen eines Sandwichelements aus einer unteren und einer oberen Deckschicht (35), einem die Deckschichten in einem Außenrandbereich verbindenden Rahmen und einem Schaummaterial zwischen den Deckschichten und innerhalb des Rahmens,
und mit einer Auftragsvorrichtung (33) mit einer Austrittsöffnung, wobei die Auftragsvorrichtung (33) dazu ausgelegt ist, dass das Schaummaterial oder eine Vorläuferflüssigkeit dazu aus der Austrittsöffnung in eine oben offene Kassette (15) aus der unteren Deckschicht und dem Rahmen aufgebracht wird, um die Kassette (15) danach mit der oberen Deckschicht (35) zu verbinden,
und mit einer Fördereinrichtung (5) zum Fördern der Kassette (15) in einer Längsrichtung, wobei die Auftragsvorrichtung (33) dazu ausgelegt ist, mit der Austrittsöffnung so bewegt zu werden, dass das Schaummaterial in Querrichtung verteilt wird,
**dadurch gekennzeichnet, dass** die Auftragsvorrichtung (33) dazu ausgelegt ist, mit der Austrittsöffnung zweidimensional bewegt zu werden, wobei eine Richtung der Bewegung der Querrichtung und die andere Richtung der Längsrichtung entspricht.

16. Produktionsanlage nach Anspruch 15 zur Durchführung des Verfahrens nach einem der Ansprüche 2 -14.

## Claims

1. A method of producing a sandwich element from a lower and an upper cover layer (35), a frame connecting said cover layers in a peripheral region and a foam material between said cover layers and inside said frame,
in which said foam material or a precursor liquid therefor are applied from a discharge orifice of an application device (33), into a cassette (15), being open at its top, of said lower cover layer and said frame, and said cassette (15) is connected with said upper cover layer (35) thereafter,
wherein said cassette (15) is conveyed in a longitudinal direction by a conveyor (5) and said application device (33) with said discharge orifice is moved in such a manner that said foam material is distributed in a transversal direction,
**characterized in that** said application device (33) is two-dimensionally moved with said discharge orifice, wherein one direction of the movement corresponds to said transversal direction and the other direction corresponds to said longitudinal direction.

2. A method according to claim 1, in which the movement corresponding to said transversal direction is a translatory movement in said transversal direction.

3. A method according to claim 1 or 2, in which the movement corresponding to said longitudinal direction is a translatory movement in said longitudinal direction.

4. A method according to one of the preceding claims, in which said two-dimensional movement is programmable as a graphic line defined relatively to said cassette (15), wherein also closing phases of said application device (33) are programmable.

5. A method according to one of the preceding claims, having a second application device (34) with a second discharge orifice.

6. A method according to one of the preceding claims, in which said second application device (34) is two-dimensionally moved essentially independent of said first application device (33).

7. A method according to one of the preceding claims, in which said foam material is a PUR/PIR-foam and said precursor liquid is a reaction mixture reacting to a PUR/PIR-foam, respectively.

8. A method according to one of the preceding claims, in which said sandwich element is a door element.

9. A method according to one of the preceding claims, in which said sandwich element has a sparing (37) in the foam material layer and a region corresponding to said sparing (37) is driven around during foam material application.

10. A method according to one of the preceding claims, in which said application device(s) comprise(s) a self-cleaning recirculation mixing head (33, 34).

11. A method according to one of the preceding claims, in which said cassette (15) connected with said upper cover layer (35) is conveyed into a double band press (9).

12. A method according to one of the preceding claims, in which said cassette (15) is decollated before said introducing of said foam material or precursor liquid.

13. A method according to one of the preceding claims, in which said cassette (15) is conveyed and heated in a continuous furnace (1) along a furnace distance by means of a conveyor (3, 4) before said introducing of said foam material or precursor liquid so that said cassettes (15) have reached a process temperature (Tₚ) at the end of said conveyor distance, wherein said continuous furnace (1) is divided into a plurality of furnace zones (11 - 14) passed by said cassettes (15) and wherein each furnace zone (11 - 14), during a temporary interruption of operation and resulting stopping of said conveyor (3, 4), is operated with a temperature individual reduced in such manner that cassettes (15) in said furnace zone (11 - 14) maintain essentially a zone interruption temperature essentially corresponding to the temperature of a cassette (15) in the respective furnace zone (1 - 14) during normal operation so that after resume of normal operation there is no substantial overheating of said cassettes (15) over said given process temperature (Tₚ).

14. A method according to one of the preceding claims, wherein, after application of said foam material or precursor liquid, latch means (46, 48, 49) of said upper cover layer (35) and said frame of said cassette (15) are engaged at at least two opposed outer edges of said sandwich element of said cover layers and said frame so that said frame and said upper cover layer (35) are connected, wherein said latch means are engaged automatically by an automatic clipping device (7) and said automatic clipping device (7) engages primarily said latch means at one of both sides, said upper cover layer (35) and said cassette (15) being mutually inclined therein, and thereafter transforms said inclination into an abutment while maintaining said engagement, wherein in achieving said abutment said latch means on the other of both sides is engaged.

15. A production installation for producing a sandwich element from a lower and an upper cover layer (35), a frame connecting said cover layers in a peripheral region and a foam material between said cover layers and inside said frame,
and comprising an application device (33) having a discharge orifice, said application device (33) being adapted to apply said foam material or a precursor liquid therefor from said discharge orifice into a cassette (15), being open at its top, of said lower cover layer and said frame for connecting said cassette (15) with said upper cover layer (35) thereafter,
and comprising a conveyor (5) for conveying said cassette (15) in a longitudinal direction, said application device (33) being adapted to be moved with said discharge orifice in such a manner that said foam material is distributed in a transversal direction,
**characterized in that** said application device (33) is adapted to be two-dimensionally moved with said discharge orifice, wherein one direction of the movement corresponds to said transversal direction and the other direction corresponds to said longitudinal direction.

16. A production installation according to claim 15 being adapted for carrying-out said method according to one of claims 2 to 14.

## Revendications

1. Procédé de fabrication d'un panneau sandwich constitué de plaques de parement inférieure et supérieure (35), d'un cadre reliant ces plaques sur leur périmètre, et d'une mousse entre les plaques de parement et à l'intérieur du cadre,
au cours duquel la mousse ou la préparation liquide pour mousse expansée est appliquée à l'aide de la buse d'une installation d'application (33) dans un caisson ouvert sur sa partie supérieure (15) constitué de la plaque de parement inférieure et du cadre, la plaque de parement supérieure (35) étant fixée sur le caisson (15) par la suite,
où le caisson (15) est transporté par un convoyeur (5) dans une direction longitudinale, et l'installation d'application (33) et sa buse sont déplacées de manière à ce que la mousse soit répartie dans la direction perpendiculaire,
**caractérisé par le fait que** l'installation d'application (33) et sa buse sont déplacées bidimensionnellement dont un axe correspond à la direction du mouvement perpendiculaire et l'autre axe correspond à la direction longitudinale.

2. Procédé suivant la revendication 1, pour lequel le mouvement dans la direction perpendiculaire est un mouvement de translation dans la direction perpendiculaire.

3. Procédé suivant la revendication 1 ou 2, pour lequel le mouvement dans la direction longitudinale est un mouvement de translation dans la direction longitudinale

4. Procédé suivant l'une des revendications précédentes, pour lequel le déplacement bidimensionnel est programmable sous la forme d'une courbe graphique relativement au caisson (15), des phases de fermeture de l'installation d'application (33) étant également programmables.

5. Procédé suivant l'une des revendications précédentes, pour lequel est prévue une deuxième installation d'application (34) avec une deuxième buse.

6. Procédé suivant la revendication 5, pour lequel la deuxième installation d'application (34) est déplacée bidimensionnellement de manière indépendante de la première installation d'application (33).

7. Procédé suivant l'une des revendications précédentes, pour lequel la mousse est une mousse PUR/PIR, resp. la préparation liquide est un mélange réactif pour mousse PUR/PIR.

8. Procédé suivant l'une des revendications précédentes, pour lequel le panneau sandwich est un élément de porte.

9. Procédé suivant l'une des revendications précédentes, pour lequel le panneau sandwich présente un évidement (37) dans la couche de mousse, et pour lequel cet évidemment est contourné lors de la répartition de la mousse.

10. Procédé suivant l'une des revendications précédentes, pour lequel l'(les) installation(s) d'application présente (nt) une tête de mélange à recirculation auto-nettoyante (33,34).

11. Procédé suivant l'une des revendications précédentes, pour lequel le caisson (15) sur lequel a été fixée la plaque de parement (35) est transporté vers un convoyeur à double bande.

12. Procédé suivant l'une des revendications précédentes, pour lequel le caisson (15) est isolé avant l'application de la mousse ou de la préparation liquide pour mousse expansée.

13. Procédé suivant l'une des revendications précédentes, pour lequel les caissons (15) avant l'introduction de la mousse ou de la préparation liquide pour mousse expansée, sont transportés et réchauffes dans un four continu (1) sur une certaine distance à l'aide d'un convoyeur (3, 4), de manière à ce que les caissons (15) atteignent à la fin de la distance de transport une température de process (Tp), le four continu (1) étant réparti sur plusieurs zones (11-14) traversées par les caissons (15), et lorsque survient une interruption temporaire de production, associée à un arrêt du convoyeur (3, 4), chaque zone (11-14) globalement à la température d'un caisson (15) dans la zone (11-14) correspondante en exploitation normale, de manière qu'après reprise de l'activité normale, il n'existe pas de surchauffe significative des caissons (15) par rapport à la température de consigne du process (Tp).

14. Procédé suivant l'une des revendications précédentes, pour lequel après l'application de la mousse ou de la préparation liquide pour mousse expansée, des dispositifs d'encliquetage d'au moins une des plaques (35) et du cadre du caisson (15) sont mis en place sur au moins deux bordures opposées du panneau sandwich constitué des plaques de parement et du cadre avec le remplissage, de manière à fixer la plaque de parement (35) sur le cadre, les dispositifs d'encliquetage étant mis en place automatiquement par une installation d'encliquetage (7) et l'installation automatique d'encliquetage (7) met tout d'abord en prise le dispositif d'encliquetage sur l'un des deux cotés, la plaque de parement (35) et le caisson (15) présentant un angle relatif, puis, en maintenant cette prise, les fait changer de position, et lors de cette opération, met en prise le dispositif d'encliquetage sur l'autre coté.

15. Installation de production pour la fabrication d'un panneau sandwich constitué de plaques de parement supérieure et inférieure, d'un cadre reliant les plaques sur leur périmètre, et de mousse entre les plaques et à l'intérieur du cadre,
avec une installation d'application (33) équipée d'une buse, cette installation d'application (33) étant conçue pour répartir une mousse ou une préparation liquide pour mousse expansée à l'aide de la buse dans un caisson (15) ouvert dans sa partie supérieure et constitué d'une plaque de parement inférieure et d'un cadre, pour fixer ensuite la plaque de parement supérieure (35) sur le caisson (15),
et avec un convoyeur (5) pour la transport des caissons (15) dans une direction longitudinale, l'installation d'application (33) étant conçue, pour être déplacée avec sa buse pour répartir la mousse dans la direction perpendiculaire,
et **caractérisée par le fait que** l'installation d'application (33) est conçue pour être déplacée la buse dans un plan dont un axe correspond au déplacement perpendiculaire, et l'autre axe correspond à la direction longitudinale.

16. Installation de production suivant la revendication 15 pour exécution du procédé suivant les revendications 2 - 14.
